# EUROPÄISCHE PATENTANMELDUNG

(11) **EP 1 136 087 A2**
(43) Veröffentlichungstag der Anmeldung: **26.09.2001**
(21) Anmeldenummer: 01105808.8
(22) Anmeldetag: 08.03.2001
(51) Int. Cl.: A61M 1/02, G06K 7/08, B01L 3/00, G01N 35/00

(54) **Vorrichtung und Verfahren zum Überwachen und Verwalten von Produkten**

(30) Priorität: 10.03.2000 DE 10011827; 30.11.2000 DE 10059539
(71) Anmelder: LMB Technologie GmbH, 85445 Schwaig (DE)
(72) Erfinder: Jentsch, Klaus D., 85445 Oberding (DE); Kriebel, Frank, 01896 Lichtenberg (DE); Seidowski, Thomas, 01157 Dresden (DE)
(74) Vertreter: Winter, Brandl, Fürniss, Hübner, Röss, Kaiser, Polte Partnerschaft

(57) **Zusammenfassung**

Es wird eine Vorrichtung zum Überwachen und Verwalten von Produkten, wie zum Beispiel Blutprodukten, offenbart, wobei die Vorrichtung in oder an einem Produkt anbringbar ist und eine Sende/Empfangsvorrichtung aufweist, in der das Produkt betreffende Daten speicherbar sind, wobei die das Produkt betreffenden Daten mittels einer externen Schreib/Lesevorrichtung berührungslos in die Sende/Empfangsvorrichtung schreibbar und aus dieser lesbar sind. Die Vorrichtung weist weiterhin eine Sensorvorrichtung auf, die einen zeitlich veränderlichen Zustandsparameter des Produkts überwacht und in Abhängigkeit von einem erfaßten Wert des zeitlich veränderlichen Zustandsparameters einem aktuell vorliegenden Zustand entsprechende Daten zu der Sende/Empfangsvorrichtung überträgt. Die dem aktuell vorliegenden Zustand entsprechenden Daten werden als Reaktion auf das Übertragen von der Sensorvorrichtung in die Sende/Empfangsvorrichtung geschrieben. Weiterhin wird ein Verfahren zum Überwachen und Verwalten von Produkten offenbart.

## Beschreibung

Die vorliegende Erfindung betrifft eine Vorrichtung, und ein Verfahren zum Überwachen und Verwalten von Produkten gemäß dem Oberbegriff der Ansprüche 1 und 12.

Aus der **DE-A-196 21 179** ist eine Vorrichtung und ein Verfahren zum Verwalten von Produkten gemäß dem Oberbegriff der Ansprüche 1 und 12 bekannt, bei denen ein Transponder auf einem Probenbehälter, wie zum Beispiel einem Blutbeutel, angebracht ist. Mittels einer externen Vorrichtung werden ein Blutprodukt betreffende Daten in den Transponder gespeichert. In einem Zentrallabor können die in den Transponder gespeicherten Daten mittels einer weiteren externen Vorrichtung aus dem Transponder ausgelesen werden und bei der Lagerverwaltung, der Zuordnung der in den Probenbehältern enthaltenen Blutprodukte zu Arbeitsplätzen und der labordiagnostischen Untersuchung des Blutprodukts verwendet werden. Nach einer jeweiligen labordiagnostischen Untersuchung des Blutprodukts können wiederum das Blutprodukt betreffende Daten in den Transponder gespeichert werden, wobei diese Daten dann ebenso gemessene Laborwerte enthalten können.

Ein Vorteil, der durch die zuvor beschriebene Vorgehensweise erzielt wird, besteht darin, daß eine kostengünstige Bearbeitung von Blutprodukten ermöglicht wird. Ferner ist es nicht nötig, Anforderungslisten für jeweilige labordiagnostische Untersuchungen zu erstellen, da in den Transponder Daten gespeichert werden können, die angeben, welche labordiagnostischen Untersuchungen an einem jeweiligen Blutprodukt durchzuführen sind.

Obgleich bei der zuvor erwähnten Vorgehensweise ein Verwalten der Blutprodukte und von jeweilige Blutprodukte betreffenden Daten sehr zuverlässig und einfach durchgeführt werden kann, eignet sich die Vorgehensweise nur bedingt zum Überwachen von Blutprodukten, da in den Transponder lediglich das Blutprodukt betreffende Daten gespeichert werden und aus diesem auslesbar sind. Die zuvor erwähnte Druckschrift bezieht sich lediglich auf das Verwalten von Produkten und gibt keinerlei Hinweis darauf, daß es wünschenswert sein könnte, Produkte zum Beispiel während ihres Transportwegs von einem Ort zum anderen oder während der Lagerung zu überwachen.

Es ist demgemäß die Aufgabe der vorliegenden Erfindung, eine Vorrichtung und ein Verfahren zum Überwachen und Verwalten von Produkten zu schaffen, mittels denen eine zuverlässige Überwachung von Produkten durchgeführt werden kann.

Diese Aufgabe wird hinsichtlich der Vorrichtung mit den in Anspruch 1 angegebenen Maßnahmen und hinsichtlich des Verfahrens mit den in Anspruch 12 angegebenen Maßnahmen gelöst.

Genauer gesagt ist eine erfindungsgemäße Vorrichtung zum Überwachen und Verwalten von Produkten in oder an einem Produkt anbringbar und weist eine Sende/Empfangsvorrichtung auf, in der das Produkt betreffende Daten speicherbar sind. Die das Produkt betreffenden Daten sind mittels einer externen Schreib/Lesevorrichtung berührungslos in die Sende/Empfangsvorrichtung schreibbar und aus dieser lesbar. Die Vorrichtung weist weiterhin eine Sensorvorrichtung auf, die einen zeitlich veränderlichen Zustandsparameter des Produkts überwacht und in Abhängigkeit von einem erfaßten Wert des zeitlich veränderlichen Zustandsparameters einem aktuell vorliegenden Zustand entsprechende Daten zu der Sende/Empfangsvorrichtung überträgt. Die dem aktuell vorliegenden Zustand entsprechenden Daten werden als Reaktion auf das Übertragen von der Sensorvorrichtung in die Sende/Empfangsvorrichtung geschrieben.

Erfindungsgemäß ist es erkannt worden, daß es zum Überwachen und Verwalten von Produkten vorteilhaft ist, einen zeitlich veränderlichen Zustandsparameter des Produkts zu erfassen und einem aktuell vorliegenden Zustand entsprechende Daten in die Sende/Empfangsvorrichtung zu schreiben.

Durch die zuvor erwähnten Maßnahmen ist es möglich, neben den das Produkt betreffenden Daten dem aktuell vorliegenden Zustand entsprechende Daten verarbeiten zu können, wodurch zum Beispiel eine Qualitätskontrolle des Produkts ermöglicht wird, ohne daß ein hoher Aufwand oder hohe Kosten erforderlich sind. Ferner wird aufgrund der dem aktuell vorliegenden Zustand entsprechenden Daten eine höhere Flexibilität bei einem Verwalten der Produkte erzielt.

Weiterhin wird durch die zuvor genannten Maßnahmen die Möglichkeit einer zuverlässigen Überwachung der Produkte geschaffen, da nicht nur die Produkte betreffende Daten, sondern ebenso einem aktuell vorliegenden Zustand entsprechende Daten bei einem Überwachen verwendet werden können, so daß an unterschiedlichen Orten verschiedene zweckmäßige Überwachungsvorgänge durchgeführt werden können, die diese Daten berücksichtigen.

Gemäß einer Ausgestaltung der vorliegenden Erfindung sind die dem aktuell vorliegenden Zustand entsprechenden Daten, die in der Sende/Empfangsvorrichtung gespeichert sind, mittels der externen Vorrichtung lesbar. Dadurch können die dem aktuell vorliegenden Zustand entsprechenden Daten bei einer externen Verarbeitung verwendet werden.

Gemäß einer weiteren Ausgestaltung ist die Sende/Empfangsvorrichtung ein Transponder. Da ein Transponder keine eigene Energieversorgungsquelle erfordert, ist somit eine einfache Ausgestaltung der Vorrichtung erzielbar.

Gemäß einer weiteren Ausgestaltung erfaßt die Sensorvorrichtung als den zeitlich veränderlichen Zustandsparameter des Produkts eine Temperatur des Produkts, eine um das Produkt vorhandene Umgebungstemperatur, Stöße bezüglich des Produkts einen Strahlungswert des Produkts oder einer Umgebung des Produkts, eine verstrichene Zeit oder beliebige Kombinationen von diesen.

Gemäß einer weiteren Ausgestaltung weist die Vorrichtung ein Behältnis für das Produkt auf, das zum Beispiel ein Beutel sein kann.

Gemäß einer weiteren Ausgestaltung können die Sensorvorrichtung und die Speichervorrichtung mittels einer Etikette an dem Behältnis angebracht sein. Die dem aktuell vorliegenden Zustand entsprechenden Daten können dabei als Reaktion auf das Übertragen von der Sensorvorrichtung direkt in die Sende/Empfangsvorrichtung geschrieben werden.

Gemäß einer weiteren Ausgestaltung kann die Sensorvorrichtung getrennt von dem Behältnis vorgesehen sein. Die dem aktuell vorliegenden Zustand entsprechenden Daten können dabei als Reaktion auf das Übertragen von der Sensorvorrichtung mittels der externen Vorrichtung in die Sende/Empfangsvorrichtung geschrieben werden.

Gemäß einer weiteren Ausgestaltung der vorliegenden Erfindung ist das Produkt ein Blut- oder Pharmazieprodukt, ein gentechnisches Produkt, ein biotechnisches Produkt, ein eßbares Produkt, ein Organ oder eine beliebige Ware.

Die vorliegende Erfindung schafft ebenso ein Verfahren zum Überwachen und Verwalten von Produkten mit Merkmalen, die zu denen bezüglich der zuvor beschriebenen Vorrichtung zum Überwachen und Verwalten von Produkten äquivalent sind.

Ferner kann mit der erfindungsgemäßen Vorrichtung und einer externen Schreib/Lesevorrichtung ein System zum Überwachen und Verwalten von Produkten mit Merkmalen geschaffen werden, die zu denen bezüglich der zuvor beschriebenen Vorrichtung zum Überwachen und Verwalten von Produkten äquivalent sind.

Die vorliegende Erfindung wird nachstehend anhand von Ausführungsbeispielen unter Bezugnahme auf die beiliegende Zeichnung näher erläutert.

Es zeigt:
- **Fig. 1**: eine schematische Darstellung einer Vorrichtung gemäß einem ersten Ausführungsbeispiel der vorliegenden Erfindung; und
- **Fig. 2**: eine schematische Darstellung einer Vorrichtung gemäß einem zweiten Ausführungsbeispiel der vorliegenden Erfindung.

Es ist anzumerken, daß, obgleich sich die nachfolgend beschriebenen Ausführungsbeispiele auf eine Anwendung der vorliegenden Erfindung bei einem Blutbeutel beziehen, die vorliegende Erfindung nicht auf diese Anwendung beschränkt ist. Vielmehr kann die vorliegende Erfindung an allen Produkten angewendet werden, wobei die vorliegende Erfindung insbesondere überall dort sinnvoll anwendbar ist, wo Produkte gehandhabt werden müssen, deren Zustand überwacht werden muß, um eine gute Qualität der Produkte zu gewährleisten.

Ferner ist die vorliegende Erfindung nicht darauf beschränkt, an einem Behältnis, wie zum Beispiel einem Blutbeutel, angewendet zu werden. Vielmehr kann die vorliegende Erfindung zum Beispiel ebenso direkt in ein Produkt eingepflanzt oder direkt an diesem angebracht werden, wenn das jeweilige Produkt in geeigneter Form vorliegt.

Nachstehend erfolgt die Beschreibung eines ersten Ausführungsbeispiels der vorliegenden Erfindung.

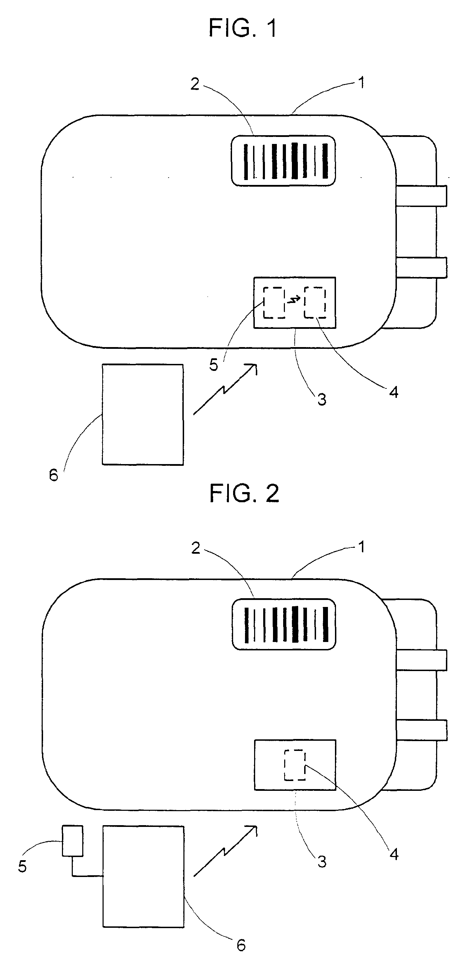

**Fig. 1** zeigt eine Vorrichtung gemäß dem ersten Ausführungsbeispiel der vorliegenden Erfindung.

In **Fig. 1** bezeichnet das Bezugszeichen 1 einen Blutbeutel, bezeichnet das Bezugszeichen 2 eine Strichcodeetikette, bezeichnet das Bezugszeichen 3 eine Etikette, bezeichnet das Bezugszeichen 4 einen Transponder, bezeichnet das Bezugszeichen 5 einen Temperatursensor und bezeichnet das Bezugszeichen 6 eine externe Transponder-Schreib/Lesevorrichtung.

Obgleich in diesem Ausführungsbeispiel der vorliegenden Erfindung der Transponder 4 als eine Sende/Empfangsvorrichtung verwendet wird, kann ebenso eine andere Sende/Empfangsvorrichtung, wie zum Beispiel ein Bluetooth-Chip, verwendet werden, solange in die Sende/Empfangsvorrichtung Daten geschrieben und aus dieser gelesen werden können.

Weiterhin kann, obgleich in diesem Ausführungsbeispiel der vorliegenden Erfindung die externe Transponder-Schreib/Lesevorrichtung 6 verwendet wird, ebenso eine andere externe Schreib/Lesevorrichtung, wie zum Beispiel eine externe Bluetooth-Chip-Schreib/Lesevorrichtung, verwendet werden, solange diese Daten berührungslos in die Sende/Empfangsvorrichtung schreiben und lesen kann.

Schließlich kann, obgleich in diesem Ausführungsbeispiel der vorliegenden Erfindung der Temperatursensor 6 als eine Sensorvorrichtung verwendet wird, eine andere Sensorvorrichtung verwendet werden, solange diese einen Wert eines zu überwachenden zeitlich veränderlichen Zustandsparameters erfassen kann. Derartige zu überwachende zeitlich veränderliche Zustandsparameter können zum Beispiel neben der Temperatur alle zeitlich veränderlichen Zustandsparameter sein, die eine Aussage über eine Qualität, Verderblichkeit usw. des Blut- oder Pharmazieprodukts ermöglichen. Dies kann zum Beispiel eine zeitlich veränderliche Zusammensetzung des Blut- oder Pharmazieprodukts sein. Die jeweils verwendeten Sensorvorrichtungen können sowohl aktive Sensorvorrichtungen, die eine eigene Energieversorgungsquelle benötigen, als auch passive Sensorvorrichtungen sein, die keine eigene Energieversorgungsquelle benötigen und zum Beispiel wie ein Transponder mit extern eingekoppelter Fremdenergie arbeiten.

Nachfolgend erfolgt die Beschreibung des Aufbaus des ersten Ausführungsbeispiels der vorliegenden Erfindung.

Wie es in **Fig. 1** gezeigt ist, ist an einem Blutbeutel 1 eine Strichcodeetikette 2 angebracht, wobei der Strichcode Daten speichert, die ein Blutprodukt betreffen, das sich in dem Blutbeutel 1 befindet. Ein derartiges Strichcodeetikette 2 kann zum Beispiel nach dem Ende einer Blutentnahme erstellt werden, bei welcher der Blutbeutel 1 verwendet wird. Das Strichcodeetikette 2 muß jedoch nicht zwingend vorgesehen sein.

Weiterhin ist an dem Blutbeutel eine Etikette 3 angebracht, in die der Transponder 4 und der Temperatursensor 5 eingebettet sind. Obgleich in **Fig. 1** lediglich ein Transponder 4 und ein Temperatursensor 5 gezeigt sind, können mehrere Transponder 4 und/oder mehrere Temperatursensoren 5 und/oder mehrere andere Sensoren in das Etikette 2 eingebettet sein. Das Etikette 2 ist vorzugsweise mittels einer Klebeschicht an dem Blutbeutel 1 angebracht, wobei die Klebeschicht auch zum Stützen einer Mechanik, von Anschlüssen und einer Antenne des Transponders 4 dient. Schließlich ist von dem Blutbeutel 1 getrennt die externe Transponder-Schreib/Lesevorrichtung 6 vorgesehen, die mit einer nicht gezeigten externen Verarbeitungsvorrichtung, wie zum Beispiel einem Blutentnahmemonitor, einem Rechner oder ähnlichem drahtlos oder mittels einer zweckmäßigen, zum Beispiel optisch oder elektrisch leitenden Verbindung verbunden ist. Die externe Verarbeitungsvorrichtung kann ferner wiederum drahtlos oder mittels einer zweckmäßigen, zum Beispiel elektrisch oder optisch leitenden Verbindung mit einem Computernetzwerk verbunden sein.

Nachfolgend erfolgt die Beschreibung der Funktionsweise des ersten Ausführungsbeispiels der vorliegenden Erfindung.

Wenn in den Blutbeutel 1 ein Blutprodukt eingebracht wird, werden dieses Blutprodukt betreffende Daten mittels der externen Transponder-Schreib/Lesevorrichtung 6 berührungslos in den Transponder 4 geschrieben. Es ist ebenso möglich, das Blutprodukt betreffende Daten, die im voraus bekannt sind, vor einem Einbringen des Blutprodukts in den Blutbeutel mittels der externen Transponder-Schreib/Lesevorrichtung in den Transponder 4 zu schreiben. Diese Daten stehen dann bei späteren Überwachungsund Verwaltungsvorgängen zur Verfügung und können mittels einer jeweiligen Transponder-Schreib/Lesevorrichtung 6 aus dem Transponder gelesen und einer weiteren Verarbeitung unterzogen werden, können um weitere Daten ergänzt, geändert oder gelöscht werden. Derartige Überwachungsund Verwaltungsvorgänge können zum Beispiel ein Transport des Blutbeutels 1, ein Einlagern des Blutbeutels 1, ein Auslagern des Blutbeutels 1, eine vorbestimmte Laboruntersuchung des in dem Blutbeutel 1 enthaltenen Blutprodukts, eine Vernichtung des in dem Blutbeutel 1 enthaltenen Blutprodukts usw. sein. Neben diesen das Blutprodukt betreffenden Daten kann der Temperatursensor 5 zu jedem beliebigen Zeitpunkt und in beliebigen zeitlichen Abständen und an beliebigen Orten einen Wert einer aktuell vorliegenden Temperatur des in dem Blutbeutel 1 enthaltenen Blutprodukts, einen Wert der in der Umgebung des Blutprodukts aktuell vorliegenden Temperatur oder beides erfassen und direkt entweder berührungslos oder über eine zweckmäßige, zum Beispiel elektrisch oder optisch leitende Verbindung in den Transponder 4 schreiben. Ein jeweils erfaßter Wert der Temperatur oder allgemein ein jeweils erfaßter Wert eines zeitlich veränderlichen Zustandsparameters des Blutprodukts kann dann ebenso zu jedem beliebigen Zeitpunkt ähnlich den zuvor beschriebenen das Blutprodukt betreffenden Daten verwendet und verarbeitet werden.

Die externe Transponder-Schreib/Lesevorrichtung 6 ist mit einer nicht gezeigten Verarbeitungsvorrichtung, wie zum Beispiel einem Blutentnahmemonitor, einem an ein Computernetz angeschlossenen Rechner oder ähnlichem entweder drahtlos oder mit einer zweckmäßigen leitenden Verbindung, wie zum Beispiel einer elektrisch oder optisch leitenden Verbindung, verbunden, wie es zuvor beschrieben worden ist, so daß über die externe Transponder-Schreib/Lesevorrichtung 6 die Möglichkeit besteht, sowohl Daten von einer Verarbeitungsvorrichtung in den Transponder 4 zu schreiben als auch von diesem zu lesen, um die zuvor beschriebenen Verarbeitungen durchzuführen. Ferner kann mittels einer derartigen Verarbeitungsvorrichtung und der externen Transponder-Schreib/Lesevorrichtung 6 zum Beispiel die Einhaltung einer vorgeschriebenen Kühlkette mittels der Daten überwacht werden, die jeweiligen erfaßten Werten der Temperatur entsprechen.

Mittels der zuvor beschriebenen Vorrichtung besteht die Möglichkeit, bei beliebigen Vorgängen, die eine Blutentnahme, einen Transport, eine Einlagerung, eine Verarbeitung eines Blutprodukts, eine Laboruntersuchung des Blutprodukts, eine Vernichtung des Blutprodukts usw. umfassen, ein Blutprodukt betreffende Daten auf den Transponder 4 zu schreiben, mittels eines externen Rechners oder Computernetzwerks zu verarbeiten, zu verändern und/oder zu ergänzen und wieder in den Transponder 4 zu schreiben. Ferner wird die Temperatur des Blutprodukts mittels des Temperatursensors 5 überwacht, wodurch zum Beispiel die Einhaltung der Kühlkette während der Lebensdauer des Blutprodukts überwacht werden kann.

Die zuvor beschriebene Vorrichtung eignet sich hervorragend zur Verwendung bei der Überwachung und Verwaltung von Blutprodukten an unterschiedlichsten Orten, wie zum Beispiel bei der Blutentnahme, bei dem Transport, bei der Lagerung, in einer Klinik usw. Durch die Möglichkeit des Erfassens der Daten, die auf jeweiligen Transpondern jeweiliger Blutbeutel 1 gespeichert sind, die sich an einem bestimmten Ort, wie zum Beispiel einer Klinik, befinden, können diese Daten mittels einem an diesem Ort vorhandenen Computernetzwerk zweckmäßig verwaltet, verarbeitet und/oder überwacht werden.

Wenn an einem derartigen Ort an bestimmten Stellen externe Transponder-Schreib/Lesevorrichtungen 6 angebracht sind, kann ferner ein jeweiliger aktueller Aufenthaltsort jeweiliger Blutbeutel 1 überprüft und/oder erfaßt werden.

Nachstehend erfolgt die Beschreibung eines zweiten Ausführungsbeispiels der vorliegenden Erfindung.

Das zweite Ausführungsbeispiel der vorliegenden Erfindung ist ausgenommen der nachstehend beschriebenen Änderungen zu dem ersten Ausführungsbeispiel der vorliegenden Erfindung identisch, so daß die zuvor bezüglich des ersten Ausführungsbeispiels der vorliegenden Ausführungen ebenso bezüglich des zweiten Ausführungsbeispiels der vorliegenden Erfindung gelten.

**Fig. 2** zeigt eine Vorrichtung gemäß dem zweiten Ausführungsbeispiel der vorliegenden Erfindung.

Das zweite Ausführungsbeispiel der vorliegenden Erfindung unterscheidet sich darin von dem ersten Ausführungsbeispiel der vorliegenden Erfindung, daß der Temperatursensor nicht in die Etikette 3 eingebettet vorgesehen ist, sondern getrennt von dem Blutbeutel 1 vorgesehen ist. Das zuvor erwähnte Schreiben eines jeweiligen Werts einer aktuell vorliegenden Temperatur wird bei diesem Ausführungsbeispiel der vorliegenden Erfindung nicht direkt, sondern indirekt mittels der externen Vorrichtung derart durchgeführt, daß der erfaßte Wert der aktuell vorliegenden Temperatur entweder berührungslos oder über eine leitende Verbindung von dem Temperatursensor 5 zu der externen Transponder-Schreib/Lesevorrichtung 6 übertragen wird und dann von dieser in den Transponder 4 geschrieben wird.

Die weitere Funktionsweise des zweiten Ausführungsbeispiels und die weiteren Möglichkeiten zur Verarbeitung der das Blutprodukt betreffenden Daten und der der aktuell vorliegenden Temperatur entsprechenden Daten sind zu der des ersten Ausführungsbeispiels der vorliegenden Erfindung identisch, so daß eine weitere Beschreibung von diesen hier weggelassen wird.

Nachstehend erfolgt die Beschreibung von Ausgestaltungen der ersten und zweiten Ausführungsbeispiele der vorliegenden Erfindung.

Jeder Transponder 4, der an einem jeweiligen Blutbeutel 1 angebracht ist, kann eine eindeutige Seriennummer aufweisen. Wenn nunmehr an einem bestimmten Ort, wie zum Beispiel einer Lagerstätte mehrere Blutbeutel 1 vorhanden sind, kann mittels einer externen Transponder-Schreib/Lesevorrichtung 6 unter Berücksichtigung einer jeweiligen Seriennummer eines Blutbeutels 1 ausgewählt werden, welcher Transponder 4 eines bestimmten Blutbeutels 1 mit der externen Transponder-Schreib/Lesevorrichtung 6 anzusprechen ist, um Daten in diesen zu speichern oder von diesem zu lesen. Anhand einer derartigen Seriennummer besteht demgemäß die Möglichkeit, eine Datenkollision und/oder ein unbeabsichtigtes Ansprechen eines falschen Transponders 4 zu verhindern.

Ferner können mittels einer derartigen eindeutigen Seriennummer mehrere Transponder 4, die abgefragt werden sollen, mittels eines Zuweisens bestimmter Seriennummern zu einer Gruppe von abzufragenden Transpondern 4 gleichzeitig abgefragt werden, um Daten in ihnen zu speichern oder von ihnen zu lesen. Somit besteht im Fall des zweiten Ausführungsbeispiels der vorliegenden Erfindung zum Beispiel die Möglichkeit, mittels des Temperatursensors 5 eine Umgebungstemperatur während einer Lagerung oder eines Transports zu erfassen und gleichzeitig in alle Transponder 4 zu schreiben, die an Blutbeuteln 1 angebracht sind, die sich in der gleichen Umgebung befinden.

Jede externe Transponder-Schreib/Lesevorrichtung 6 kann ferner mehrere Kanäle aufweisen, wodurch die Möglichkeit besteht, mehrere Transponder 4 gleichzeitig abzufragen, um unterschiedliche Daten in diese zu schreiben oder von diesen zu lesen.

Obgleich die vorliegende Erfindung anhand von zwei Ausführungsbeispielen beschrieben worden ist, die sich auf Blut- oder Pharmazieprodukte beziehen, ist die vorliegende Erfindung nicht darauf beschränkt. es können beliebige Produkte überwacht und verwaltet werden, die zum Beispiel gentechnische Produkte, biotechnische Produkte, eßbare Produkte, Organe oder andere beliebige Waren und Gegenstände beinhalten, die überwacht und/oder verwaltet werden sollen.

Zeitliche Zustandsparameter derartiger Produkte können neben bezüglich den ersten und zweiten Ausführungsbeispielen beschriebenen ferner ebenso zum Beispiel Stöße bezüglich de Produkts, einen Strahlenwert, des Produkts oder einer Umgebung um das Produkt, wie zum Beispiel eine radioaktive Strahlung, einen Verderblichkeitszustand des Produkts, Verfallszeiten des Produkts, eine verstrichene Zeit oder beliebige Kombinationen von diesen beinhalten.

Zum Beispiel kann in dem Fall einer empfindlichen Ware bezüglich des zeitlich veränderlichen Zustandsparameters Stöße bezüglich des Produkts in die Sende/Empfangsvorrichtung geschrieben werden, wodurch zum Beispiel eine Qualitätskontrolle eines Transports ermöglicht wird, die es ferner zuläßt, daß Garantieansprüche abgeklärt werden können, falls eine Beschädigung des Produkts aufgrund von Stößen auftritt. Weiterhin kann eine verstrichene Transport- und/oder Lagerungszeit als der zeitlich veränderliche Zustandsparameter verwendet werden.

Es ist also ersichtlich, daß die vorliegende Erfindung an jedem beliebigen Produkt angewendet werden kann, das zu überwachen und/oder zu verwalten ist. Der jeweils verwendete zeitliche Zustandsparameter kann je nach vorliegendem Anwendungszweck flexibel gewählt werden.

Ein wesentlicher Vorteil wird durch die vorliegende Erfindung zum Beispiel beim Überwachen und/oder Verwalten von verderblichen Produkten, wie zum Beispiel Lebensmitteln, erzielt, da der jeweils vorliegende Zustand der verderblichen Produkte mit der erfindungsgemäßen Vorrichtung und dem erfindungsgemäßen Verfahren schnell und sicher erfaßt und berücksichtigt werden kann. Daher ist es auf einfache Weise möglich, zum Beispiel die Einhaltung einer Kühlkette oder eines Verfallsdatums zu überwachen.

## Patentansprüche

1. Vorrichtung zum Überwachen und Verwalten von Produkten, wobei die Vorrichtung in oder an einem Produkt anbringbar ist und eine Sende/Empfangsvorrichtung aufweist, in der das Produkt betreffende Daten speicherbar sind, wobei die das Produkt betreffenden Daten mittels einer externen Schreib/Lesevorrichtung berührungslos in die Sende/Empfangsvorrichtung schreibbar und aus dieser lesbar sind,
***gekennzeichnet durch**:*
eine Sensorvorrichtung, die einen zeitlich veränderlichen Zustandsparameter des Produkts überwacht und in Abhängigkeit von einem erfaßten Wert des zeitlich veränderlichen Zustandsparameters einem aktuell vorliegenden Zustand entsprechende Daten zu der Sende/Empfangsvorrichtung überträgt, wobei
die dem aktuell vorliegenden Zustand entsprechenden Daten als Reaktion auf das Übertragen von der Sensorvorrichtung in die Sende/Empfangsvorrichtung geschrieben werden.

2. Vorrichtung nach Anspruch 1, ***dadurch gekennzeichnet, daß*** die dem aktuell vorliegenden Zustand entsprechenden Daten, die in der Sende/Empfangsvorrichtung gespeichert sind, mittels der externen Vorrichtung lesbar sind.

3. Vorrichtung nach Anspruch 1 oder 2, ***dadurch gekennzeichnet, daß*** die Sende/Empfangsvorrichtung ein Transponder ist.

4. Vorrichtung nach einem der vorhergehenden Ansprüche, ***dadurch gekennzeichnet, daß*** die Sensorvorrichtung als den zeitlich veränderlichen Zustandsparameter des Produkts eine Temperatur des Produkts, eine um das Produkt vorhandene Umgebungstemperatur, Stöße bezüglich des Produkts, einen Strahlenwert des Produkts oder einer Umgebung um das Produkt, einen Verderblichkeitszustand des Produkts, Verfallszeiten des Produkts, eine verstrichene Zeit oder beliebige Kombinationen von diesen erfaßt.

5. Vorrichtung nach einem der vorhergehenden Ansprüche, ***gekennzeichnet durch*** ein Behältnis für das Produkt.

6. Vorrichtung nach Anspruch 5, ***dadurch gekennzeichnet, daß*** das Behältnis ein Beutel ist.

7. Vorrichtung nach Anspruch 5 oder 6, ***dadurch gekennzeichnet, daß*** die Sensorvorrichtung und die Speichervorrichtung mittels einer Etikette an dem Behältnis angebracht sind.

8. Vorrichtung nach Anspruch 7, ***dadurch gekennzeichnet, daß*** die dem aktuell vorliegenden Zustand entsprechenden Daten als Reaktion auf das Übertragen von der Sensorvorrichtung direkt in die Sende/Empfangsvorrichtung geschrieben werden.

9. Vorrichtung nach Anspruch 5 oder 6, ***dadurch gekennzeichnet, daß*** die Sensorvorrichtung getrennt von dem Behältnis vorgesehen ist.

10. Vorrichtung nach Anspruch 9, ***dadurch gekennzeichnet, daß*** die dem aktuell vorliegenden Zustand entsprechenden Daten als Reaktion auf das Übertragen von der Sensorvorrichtung mittels der externen Vorrichtung in die Sende/Empfangsvorrichtung geschrieben werden.

11. Vorrichtung nach einem der vorhergehenden Ansprüche,
***dadurch gekennzeichnet, daß*** das Produkt ein Blutoder Pharmazieprodukt, ein gentechnisches Produkt, ein biotechnisches Produkt, ein eßbares Produkt, ein Organ oder eine beliebige Ware ist.

12. Verfahren zum Überwachen und Verwalten von Produkten mittels einer Vorrichtung, die in oder an einem Produkt anbringbar ist und eine Sende/Empfangsvorrichtung aufweist, in der das Produkt betreffende Daten speicherbar sind, wobei die das Produkt betreffenden Daten mittels einer externen Schreib/Lesevorrichtung berührungslos in die Sende/Empfangsvorrichtung schreibbar und aus dieser lesbar sind,
***gekennzeichnet durch*** die folgenden Schritte:
Überwachen eines zeitlich veränderlichen Zustandsparameters des Produkts und Übertragen von einem aktuell vorliegenden Zustand entsprechenden Daten zu der Sende/Empfangsvorrichtung in Abhängigkeit von einem erfaßten Wert des zeitlich veränderlichen Zustandsparameters; und
Schreiben der dem aktuell vorliegenden Zustand entsprechenden Daten als Reaktion auf das Übertragen in die Sende/Empfangsvorrichtung.

13. Verfahren nach Anspruch 12, ***dadurch gekennzeichnet, daß*** die dem aktuell vorliegenden Zustand entsprechenden Daten, die in der Sende/Empfangsvorrichtung gespeichert werden, mittels der externen Vorrichtung lesbar sind.

14. Verfahren nach Anspruch 12 oder 13, ***dadurch gekennzeichnet, daß*** als die Sende/Empfangsvorrichtung ein Transponder verwendet wird.

15. Verfahren nach einem der Ansprüche 12 bis 14, ***dadurch gekennzeichnet, daß*** die Sensorvorrichtung als den zeitlich veränderlichen Zustandsparameter des Produkts eine Temperatur des Produkts, eine um das Produkt vorhandene Umgebungstemperatur, Stöße bezüglich des Produkts, einen Strahlenwert des Produkts oder einer Umgebung um das Produkt, Verfallszeiten des Produkts, eine verstrichene Zeit oder beliebige Kombinationen von diesen erfaßt.

16. Verfahren nach einem der Ansprüche 12 bis 15, ***dadurch gekennzeichnet, daß*** das Produkt vorab in ein Behältnis der Vorrichtung zum Überwachen und Erfassen von Produkten eingebracht wird.

17. Verfahren nach Anspruch 16, ***dadurch gekennzeichnet,* *daß*** als das Behältnis ein Beutel verwendet wird.

18. Verfahren nach Anspruch 16 oder 17, ***dadurch gekennzeichnet, daß*** die Sensorvorrichtung und die Speichervorrichtung vorab mittels einer Etikette an dem Behältnis angebracht werden.

19. Vorrichtung nach Anspruch 18, ***dadurch gekennzeichnet, daß*** die dem aktuell vorliegenden Zustand entsprechenden Daten als Reaktion auf das Übertragen von der Sensorvorrichtung direkt in die Sende/Empfangsvorrichtung geschrieben werden.

20. Verfahren nach 16 oder 17, ***dadurch gekennzeichnet*, *daß*** die Speichervorrichtung vorab mittels einer Etikette an dem Behältnis angebracht wird und als die Sensorvorrichtung eine von dem Behältnis getrennte Sensorvorrichtung verwendet wird.

21. Verfahren nach Anspruch 20, ***dadurch gekennzeichnet, daß*** die dem aktuell vorliegenden Zustand entsprechenden Daten als Reaktion auf das Übertragen von der Sensorvorrichtung mittels der externen Vorrichtung in die Sende/Empfangsvorrichtung geschrieben werden.

22. Vorrichtung nach einem der Ansprüche 12 bis 20, ***dadurch gekennzeichnet, daß*** das Produkt ein Blut- oder Pharmazieprodukt, ein gentechnisches Produkt, ein biotechnisches Produkt, ein eßbares Produkt, ein Organ oder eine beliebige Ware ist.
